# EUROPEAN PATENT APPLICATION

(11) **EP 4 451 045 A1**
(43) Date of publication of application: **23.10.2024**
(21) Application number: 24167931.5
(22) Date of filing: 29.03.2024
(51) Int. Cl.: G02F 1/035, G02B 6/122, G02B 6/14, G02F 1/225, G02B 6/12

(54) **PHASE MODULATION MODULE AND ELECTRO-OPTIC MODULATOR**

(30) Priority: 17.04.2023 CN 202310409581
(71) Applicant: Suzhou Lycore Technologies Co., Ltd., Suzhou, Jiangsu 215123 (CN)
(72) Inventor: LIANG, Hanxiao, SUZHOU (CN); SONG, Yipin, SUZHOU (CN); ZHOU, Yingcong, SUZHOU (CN); WU, Haicang, SUZHOU (CN); MAO, Wenhao, SUZHOU (CN); SONG, Shiwei, SUZHOU (CN); SUN, Weiqi, SUZHOU (CN); YU, Qingyang, SUZHOU (CN); ZHANG, Zhouyu, SUZHOU (CN)
(74) Representative: Reddie & Grose LLP

(57) **Abstract**

A phase modulation module and an electro-optic modulator are provided. The phase modulation module has an input end face and an output end face and comprises a substrate, an isolation layer, a waveguide layer, and an electrode layer which are arranged in sequence. The electrode layer includes a plurality of electrodes which are arranged at intervals and configured to form a modulating electric field region. The waveguide layer comprises a plate layer, a first ridge layer and a second ridge layer which are arranged in sequence in a direction away from the substrate, wherein the plate layer extends to the input end face and the output end face; the first ridge layer protrudes in a ridge shape from a surface of the plate layer, extends to the input end face and the output end face, and is partially located in the modulating electric field region; the second ridge layer protrudes in a ridge shape from a surface of the first ridge layer, has a spacing from each of the input end face and the output end face, and is partially located in the modulating electric field region; and the second ridge layer and the first ridge layer form at least one waveguide arm extending to the input end face and the output end face and modulated by the modulating electric field region.

## Description

### TECHNICAL FIELD

The present disclosure relates to the technical field of optical communications, and in particular, to a phase modulation module and an electro-optic modulator.

### BACKGROUND ART

In recent years, with rapid development of emerging network application services such as Internet of Things, driverless, telemedicine, and distance education, higher requirements have been put forward for high-speed and large-capacity communication technology. Optical communications have achieved rapid development in the direction of high-speed and large-capacity communications due to their characteristics such as a large bandwidth, high reliability, a low cost and a strong anti-interference ability. How to load high-speed electrical signals onto optical carriers is a core research content.

An electro-optic modulator is a modulator that is made based on an electro-optic effect of electro-optic materials. The electro-optic effect means that when a voltage is applied to an electro-optic material such as a lithium niobate crystal, a gallium arsenide crystal, or a lithium tantalate crystal, a refractive index of the electro-optic material will vary, resulting in a change in characteristics of light waves passing through the electro-optic material. The use of the electro-optic effect allows modulation of parameters, such as the phase, amplitude, intensity and polarization state, of optical signals.

With increasingly urgent requirements for the high-speed and large-capacity communication technology, higher requirements have been put forward for a low loss and a working performance of the electro-optic modulator.

### SUMMARY OF THE INVENTION

Aspects of the present disclosure provide a phase modulation module and an electro-optic modulator to reduce a transmission loss of the electro-optic modulator and improve the working performance of the electro-optic modulator.

According to an aspect of the present disclosure, provided is a phase modulation module, which has an input end face and an output end face, comprising a substrate, an isolation layer, a waveguide layer, and an electrode layer which are arranged in sequence, wherein the electrode layer comprises a plurality of electrodes which are arranged at intervals and configured to form a modulating electric field region; the waveguide layer comprises a plate layer, a first ridge layer and a second ridge layer which are arranged in sequence in a direction away from the substrate, wherein the plate layer extends to the input end face and the output end face; the first ridge layer protrudes in a ridge shape from a surface of the plate layer and extends to the input end face and the output end face, and the first ridge layer is partially located in the modulating electric field region; the second ridge layer protrudes in a ridge shape from a surface of the first ridge layer and has a spacing from each of the input end face and the output end face, the second ridge layer is partially located in the modulating electric field region, and the second ridge layer and the first ridge layer form at least one waveguide arm extending to the input end face and the output end face and modulated by the modulating electric field region.

In some aspects, the second ridge layer comprises a first variable-width portion, a first constant-width portion and a second variable-width portion which are connected in sequence in a length direction, wherein the first constant-width portion has a constant width everywhere, and a portion of the first constant-width portion is located in the modulating electric field region, wherein a width direction is orthogonal to the length direction; and the width of the first variable-width portion and the width of the second variable-width portion each decrease in gradient or gradually in a direction away from the first constant-width portion.

In some aspects, the first ridge layer comprises a second constant-width portion, a third variable-width portion, a plate portion, a fourth variable-width portion and a third constant-width portion which are connected in sequence in a length direction, wherein the second constant-width portion has a constant width everywhere, and a fourth constant-width portion has a constant width everywhere; a portion of the plate portion is located in the modulating electric field region; and the width of the third variable-width portion and the width of the fourth variable-width portion each decrease in gradient or gradually in a direction away from the plate portion.

In some aspects, the plurality of electrodes comprise a ground electrode and a signal electrode, and the second ridge layer and the first ridge layer form a single waveguide arm modulated by a modulating electric field region formed by the ground electrode and the signal electrode.

In some aspects, the plurality of electrodes comprise a first signal electrode, a ground electrode and a second signal electrode which are arranged in sequence; and the second ridge layer and the first ridge layer form two waveguide arms, wherein one of the waveguide arms is modulated by a modulating electric field region formed by the first signal electrode and the ground electrode, and the other waveguide arm is modulated by a modulating electric field region formed by the second signal electrode and the ground electrode.

In some aspects, the plurality of electrodes comprise a first ground electrode, a first signal electrode, a second ground electrode, a second signal electrode and a third ground electrode which are arranged in sequence; and the second ridge layer and the first ridge layer form two waveguide arms, wherein one of the waveguide arms is modulated by a modulating electric field region formed by the first ground electrode and the first signal electrode, and the other waveguide arm is modulated by a modulating electric field region formed by the second ground electrode and the second signal electrode.

In some aspects, at least a portion of the electrode layer is formed on the surface of the first ridge layer away from the substrate and does not overlap the second ridge layer, or at least a portion of the electrode layer is formed on the surface of the plate layer away from the substrate and does not overlap the first ridge layer and the second ridge layer, or at least a portion of the electrode layer is formed on a surface of the isolation layer away from the substrate and does not overlap the waveguide layer, or the phase modulation module further comprises an insulating support layer located between the waveguide layer and the electrode layer, and at least a portion of the electrode layer is formed on a surface of the insulating support layer away from the substrate and does not overlap the second ridge layer.

In some aspects, each waveguide arm comprises at least one bent portion.

In some aspects, the input end face and the output end face are respectively located on two opposite sides of the phase modulation module, or the input end face and the output end face are located on the same side of the phase modulation module.

According to an aspect of the present disclosure, provided is an electro-optic modulator, comprising a phase modulation module according to any one of the aspects described above.

In some aspects, the electro-optic modulator further comprises: a first spot size conversion element and a second spot size conversion element, wherein the first spot size conversion element has a ridge waveguide structure and comprises a divergent input end and a convergent output end, and the second spot size conversion element has a ridge waveguide structure and comprises a convergent input end and a divergent output end; and one of the at least one waveguide arm has one end coupled to the convergent output end of the first spot size conversion element, and the other end coupled to the convergent input end of the second spot size conversion element.

In some aspects, the second ridge layer and the first ridge layer form at least two waveguide arms; the electro-optic modulator further comprises a light splitting element and a light combining element, wherein the light splitting element has a ridge waveguide structure and comprises a signal input end, a first split light output end, and a second split light output end, and the light combining element has a ridge waveguide structure and comprises a first split light input end, a second split light input end, and a signal output end; and two of the at least two waveguide arms are respectively coupled at one end to the first split light output end and the second split light output end, and respectively coupled at the other end to the first split light input end and the second split light input end.

According to one or more aspects of the present disclosure, the waveguide arm may be directly coupled to ridge waveguide structures of other optical elements without the need to arrange an optical conversion element therebetween; and after entering the waveguide arm, light is transmitted in a single-layer structure of the first ridge layer, a double-layer structure composed of the first ridge layer and the second ridge layer, and the single-layer structure of the first ridge layer, so that spots can be flexibly and relatively moderately modulated by using the structural design of the first ridge layer and the second ridge layer. All these are beneficial to reduce an optical transmission loss and improve the coupling efficiency between the phase modulation module and other optical elements, thus reducing the transmission loss of the electro-optic modulator and improving the working performance of the electro-optic modulator.

These and other aspects of the present disclosure will be clear from the aspects described below, and will be illustrated with reference to the aspects described below.

### BRIEF DESCRIPTION OF THE DRAWINGS

More details, features, and advantages of the present disclosure are disclosed in the following description of exemplary aspects with reference to the accompanying drawings, in which:
FIG. 1 is a schematic diagram of a simplified structure of a conventional Mach-Zehnder modulator;
FIG. 2 is a schematic structural perspective view of a phase modulation module according to some aspects of the present disclosure;
FIG. 3 is a schematic structural top view of a phase modulation module according to some aspects of the present disclosure;
FIG. 4 is a schematic structural top view of a phase modulation module according to some aspects of the present disclosure;
FIG. 5 is a schematic structural top view of a phase modulation module according to some aspects of the present disclosure;
FIG. 6 is a schematic structural top view of an electro-optic modulator according to some aspects of the present disclosure; and
FIG. 7 is a schematic structural top view of an electro-optic modulator according to some aspects of the present disclosure.

### DETAILED DESCRIPTION OF EMBODIMENTS

Only some exemplary aspects are briefly described below. As can be appreciated by those skilled in the art, the described aspects can be modified in various ways without departing from the spirit or scope of the present disclosure. Accordingly, the accompanying drawings and the description are considered as illustrative in nature, and not as restrictive.

Currently, electro-optic modulation related technologies have been widely developed and applied in the fields of optical communications, microwave photonics, laser beam deflection, wavefront modulation, etc. A Mach-Zehnder modulator is one type of electro-optic modulator, in which an input optical signal is split into two branch optical signals, which then enter two waveguide arms, respectively. The two waveguide arms are each made of an electro-optic material and have a refractive index changing with an applied modulation voltage. The change in the refractive index of the waveguide arms may lead to a change in phases of the branch optical signals. Therefore, an output from the convergence of the two branch optical signals is an interference signal with an intensity changing with the modulation voltage. In brief, the Mach-Zehnder modulator can implement modulation of different sidebands by controlling the modulation voltage applied to the two waveguide arms. As a device for converting electrical signals into optical signals, the Mach-Zehnder modulator is one of the common core devices in optical interconnection, optical computing and optical communication systems.

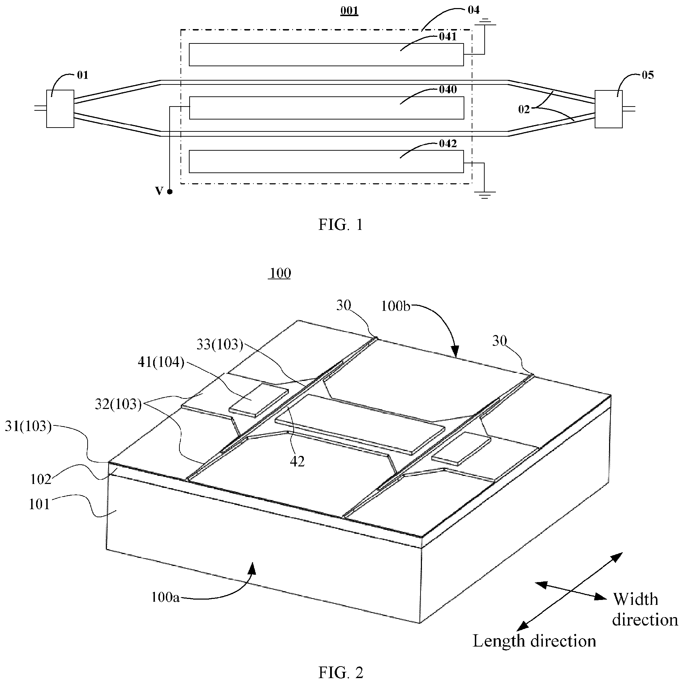

A schematic diagram of a simplified structure of a conventional Mach-Zehnder modulator is shown in FIG. 1. Ideally, the Mach-Zehnder modulator 001 has two waveguide arms 02 that are identical to each other. When the Mach-Zehnder modulator 001 is not working, neither of the two waveguide arms 02 undergoes an electro-optic effect. Input light passes through a light splitting element 01 and is then equally split into two branch optical signals. The two branch optical signals are still in the same phase after respectively passing through the waveguide arms 02, and thus a coherently enhanced signal for the two branch optical signals will be output from a light combining element 05. When the Mach-Zehnder modulator 001 is working, an electrode 04 (for example, including a signal electrode 040, a first ground electrode 041 and a second ground electrode 042) applies a modulation voltage to the two waveguide arms 02, and the two branch optical signals may differ in phase by an odd or even multiple of π after each of the two branch optical signals passes through one waveguide arm 02. When the two branch optical signals differ in phase by an even multiple of π, the light combining element 05 outputs a coherently enhanced signal for the two branch optical signals. When the two branch optical signals differ in phase by an odd multiple of π, the light combining element 05 outputs a coherent cancellation signal for the two branch optical signals.

How to reduce the transmission loss of the electro-optic modulator and improve the working performance of the electro-optic modulator is an urgent technical problem to be solved by those skilled in the art. Based on this, aspects of the present disclosure provide a phase modulation module and an electro-optic modulator.

As shown in FIG. 2, a phase modulation module 100 provided in some aspects of the present disclosure has an input end face 100a and an output end face 100b, and the phase modulation module 100 comprises a substrate 101, an isolation layer 102, a waveguide layer 103 and an electrode layer 104 which are arranged in sequence. The electrode layer 104 comprises a plurality of electrodes 41 which are arranged at intervals and configured to form a modulating electric field region 42. The waveguide layer 103 comprises a plate layer 31, a first ridge layer 32 and a second ridge layer 33 which are arranged in sequence in a direction away from the substrate 101. The plate layer 31 extends to the input end face 100a and the output end face 100b. The first ridge layer 32 protrudes in a ridge shape from a surface of the plate layer 31, extends to the input end face 100a and the output end face 100b, and is partially located in the modulating electric field region 42. The second ridge layer 33 protrudes in a ridge shape from a surface of the first ridge layer 32, has a spacing from each of the input end face 100a and the output end face 100b, and is partially located in the modulating electric field region 42. The second ridge layer 33 and the first ridge layer 32 form at least one waveguide arm 30 which extends to the input end face 100a and the output end face 100b and which can be modulated by the modulating electric field region 42.

The phase modulation module 100 is a key member in the electro-optic modulator to modulate an optical signal based on an electro-optic effect, and may be coupled to other optical elements (such as the light splitting element, the light combining element, and a spot size conversion element) of the electro-optic modulator. In the aspects of the present disclosure, the input end face 100a and the output end face 100b of the phase modulation module 100 are each located on a side face of the phase modulation module 100. The side faces of the phase modulation module 100 are adjacent to a bottom face of the substrate 101.

As the plate layer 31 generally extends in a planar shape, that "the first ridge layer 32 protrudes in a ridge shape from a surface of the plate layer 31" may be understood as that the first ridge layer 32 is formed on the surface of the plate layer 31, and the first ridge layer 32 does not completely overlap the plate layer 31, thus exhibiting a structure protruding from the plate layer 31, that is, a coverage area of the first ridge layer 32 is less than that of the plate layer 31. Similarly, that "the second ridge layer 33 protrudes in a ridge shape from a surface of the first ridge layer 32" may be understood as that the second ridge layer 33 is formed on the surface of the first ridge layer 32, and the second ridge layer 33 does not completely overlap the first ridge layer 32, thus exhibiting a structure protruding from the first ridge layer 32, that is, a coverage area of the second ridge layer 33 is less than that of the first ridge layer 32. The second ridge layer 33 and the first ridge layer 32 each comprise a portion located in the modulating electric field region 42, and the first ridge layer 32 extends to the input end face 100a and the output end face 100b, so that the second ridge layer 33 and the first ridge layer 32 can form at least one waveguide arm 30 which extends to the input end face 100a and the output end face 100b, which can be modulated by the modulating electric field region 42, and which is configured to guide light to be transmitted mainly therein.

It may be understood that the modulating electric field region 42 refers to a region where an electric field is formed between electrodes 41. The waveguide arm 30 is configured to guide the light to be transmitted mainly therein, but cannot absolutely limit the transmission of the light therein. For example, some light may escape the waveguide arm 30 to the plate layer 31 or even to the isolation layer 102. Therefore, reducing the transmission loss and improving the transmission stability are particularly important for the product performance of the electro-optic modulator.

The ridge waveguide generally has excellent characteristics such as a low dominant mode cutoff frequency, wide bandwidth, and low impedance. In the aspects of the present disclosure, the waveguide layer 103 is of a ridge waveguide structure, and comprises a plate layer 31, a first ridge layer 32 and a second ridge layer 33 which are arranged in sequence. A portion of the waveguide arm 30 that is located in the modulating electric field region 42 is of a two-layer structure (composed of a portion of the second ridge layer 33 and a portion of the first ridge layer 32), and a portion of the waveguide arm 30 close to each of the input end face 100a and the output end face 100b is of single-layer structure (composed of a portion of the first ridge layer 32). With this design, the waveguide arm 30 may be directly coupled to ridge waveguide structures of other optical elements (such as the light splitting element, the light combining element, and the spot size conversion element) without the need to arrange an optical conversion element therebetween; and after entering the waveguide arm 30, light is transmitted in a single-layer structure of the first ridge layer 32, a double-layer structure composed of the first ridge layer 32 and the second ridge layer 33, and the single-layer structure of the first ridge layer 32, so that spots can be flexibly and relatively moderately modulated by using the structural design of the first ridge layer 32 and the second ridge layer 33. All these are beneficial to reduce an optical transmission loss and improve the coupling efficiency between the phase modulation module 100 and other optical elements, thus reducing the transmission loss of the electro-optic modulator and improving the working performance of the electro-optic modulator.

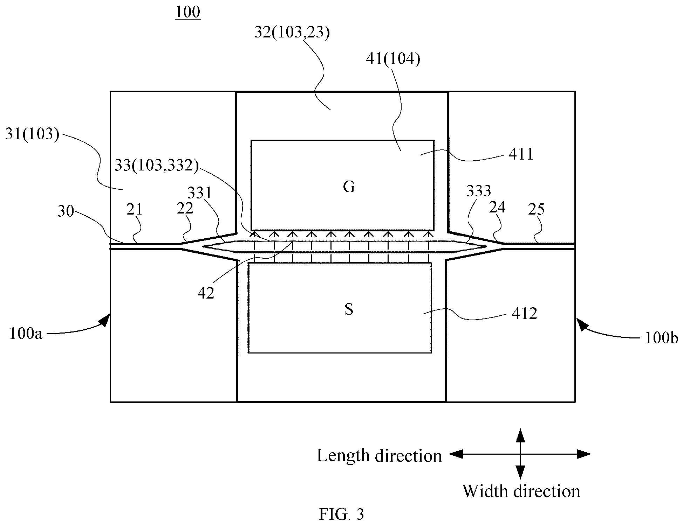

As shown in FIG. 3, in some aspects of the present disclosure, the second ridge layer 33 comprises a first variable-width portion 331, a first constant-width portion 332 and a second variable-width portion 333 which are connected in sequence in a length direction. The first constant-width portion 332 has a constant width everywhere, a portion of the first constant-width portion 332 is located in the modulating electric field region 42, and the width of the first variable-width portion 331 and the width of the second variable-width portion 333 each decrease in gradient or gradually in a direction away from the first constant-width portion 332. A width direction is orthogonal to the length direction.

In these aspect, two ends of the first constant-width portion 332 that are distributed in the length direction both extend to the outside of the modulating electric field region 42. In other aspects of the present disclosure, it is also possible that one of the ends of the first constant-width portion that are distributed in the length direction extends to the outside of the modulating electric field region, which is not specifically limited in the present disclosure.

Taking the first variable-width portion 331 as an example, as shown in FIG. 3, the width of the first variable-width portion gradually decreases in the direction away from the first constant-width portion 332, and two side edges of the first variable-width portion (or one side edge thereof) are diagonally shaped (or may be curved), so that for any two positions in the length direction of the first variable-width portion, one position farther away from the first constant-width portion 332 has a smaller width value.

Taking the first variable-width portion as an example, when the width of the first variable-width portion decreases in gradient in the direction away from the first constant-width portion, at least one side edge of the first variable-width portion is folded. The first variable-width portion 331 may be divided into at least two sections according to a width change rule thereof, in which a section farther away from the first constant-width portion 332 has a smaller width mean.

The first variable-width portion 331 and the second variable-width portion 333 each may perform relatively moderate spot size modulation on the light transmitted in the waveguide arm 30 before entering the modulating electric field region 42 and after leaving the modulating electric field region 42, so that spot size of the transmitted light is gradually changed (for example, the spot sizes are gradually increased or decreased), which is beneficial to reduce the optical transmission loss. The first constant-width portion 332 may perform steady-state spot size modulation on the transmitted light that has passed through a modulating electric field, such that the spot size is kept stable, which is beneficial to improve the optical transmission stability.

In other aspects of the present disclosure, the first variable-width portion 331, the first constant-width portion 332 and the second variable-width portion 333 described above may adopt a constant-width design as a whole instead of the variable-width design.

As shown in FIG. 3, in some aspects of the present disclosure, the first ridge layer 32 comprises a second constant-width portion 21, a third variable-width portion 22, a plate portion 23, a fourth variable-width portion 24 and a third constant-width portion 25 which are connected in sequence in a length direction. The second constant-width portion 21 has a constant width everywhere, the third constant-width portion 25 has a constant width everywhere, a portion of the plate portion 23 is located in the modulating electric field region 42, and the width of the third variable-width portion 22 and the width of the fourth variable-width portion 24 each decrease in gradient or gradually in a direction away from the plate portion 23.

In these aspect, two sides of the plate portion 23 that are distributed in the length direction both extend to the outside of the modulating electric field region 42. In other aspects of the present disclosure, it is also possible that one of the sides of the plate portion that are distributed in the length direction extends to the outside of the modulating electric field region, which is not specifically limited in the present disclosure.

The second constant-width portion 21 and the third constant-width portion 25 each may perform steady-state spot size modulation on transmitted light entering the waveguide arm 30 from the input end face 100a and transmitted light about to leave the waveguide arm 30 from the output end face 100b, so that the spot size of the transmitted light is kept stable, which is beneficial to improve the optical transmission stability, and further improve the coupling efficiency between the phase modulation module 100 and other optical elements. The third variable-width portion 22 cooperates with the first variable-width portion 331, and the fourth variable-width portion 24 cooperates with the second variable-width portion 333, so that it is possible to perform relatively moderate spot size modulation on the light transmitted in the waveguide arm 30 before entering the modulating electric field region 42 and after leaving the modulating electric field region 42, so that spot size of the transmitted light is gradually changed (for example, the spot sizes are gradually increased or decreased), which is beneficial to reduce the optical transmission loss.

In other aspects of the present disclosure, the second constant-width portion 21, the third variable-width portion 22, the plate portion 23, the fourth variable-width portion 24 and the third constant-width portion 25 described above may adopt a constant-width design as a whole instead of the variable-width design.

In the aspects of the present disclosure, the specific structural form of the electrode layer 104 is not limited. In some aspects, as shown in FIG. 2, at least a portion (which may be a portion or all) of the electrode layer 104 is formed on the surface of the first ridge layer 32 away from the substrate 101 and does not overlap the second ridge layer 33. The first ridge layer 32 may comprise a plate portion 23 extending in a planar shape, and at least a portion of the electrode layer 104 is formed on a surface of the plate portion 23.

In some aspects of the present disclosure, at least a portion of the electrode layer may alternatively be formed on the surface of the plate layer away from the substrate and does not overlap the first ridge layer and the second ridge layer.

In some aspects of the present disclosure, at least a portion of the electrode layer may alternatively be formed on a surface of the isolation layer away from the substrate and does not overlap the waveguide layer.

In some aspects of the present disclosure, the phase modulation module may further comprise an insulating support layer (not shown) located between the waveguide layer and the electrode layer, and at least a portion of the electrode layer is formed on a surface of the insulating support layer away from the substrate and does not overlap the second ridge layer.

The electrode layer 104 may have the same set height (that is, a distance between the electrode layer 104 and the substrate 101) everywhere, or may have different set heights at different portions. For example, a portion of the electrode layer 104 that serves as a ground electrode and a portion thereof that serves as a signal electrode may be provided at different heights by using the foregoing design, which facilitates flexible regulation and design of electrical signal transmission using this height difference, allowing the difference in the transmission speeds of the optical signals and the electrical signals to be reduced, and thus making the two achieve a good match therebetween.

The specific number and arrangement of electrodes 41 are not limited. As shown in FIG. 3, in some aspects of the present disclosure, the plurality of electrodes 41 comprise a ground electrode 411 and a signal electrode 412, and the second ridge layer 33 and the first ridge layer 32 form a single waveguide arm 30 modulated by a modulating electric field region 42 formed by the ground electrode 411 and the signal electrode 412. This type of phase modulation module 100 may be used in the electro-optic modulator and directly coupled to an input-side spot size conversion element and an output-side spot size conversion element.

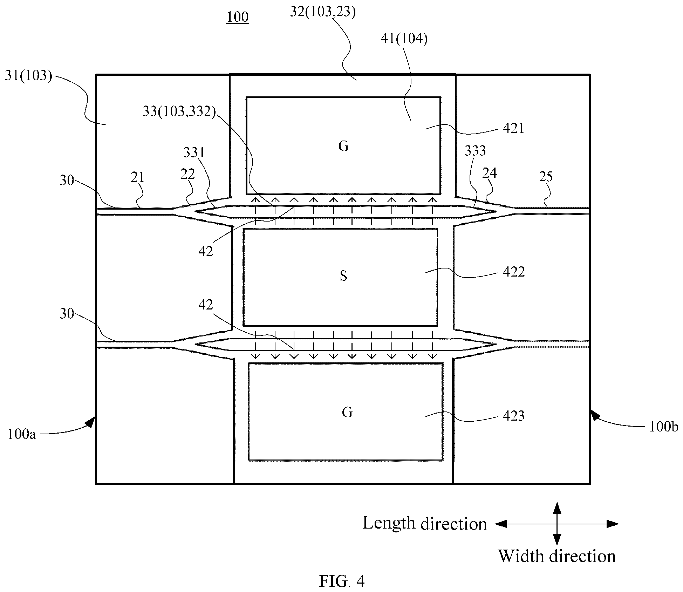

As shown in FIG. 4, in some aspects of the present disclosure, the plurality of electrodes 41 comprise a first signal electrode 421, a ground electrode 422 and a second signal electrode 423 which are arranged in sequence, and the second ridge layer 33 and the first ridge layer 32 form two waveguide arms 30. One of the waveguide arms 30 is configured to be modulated by a modulating electric field region 42 formed by the first signal electrode 421 and the ground electrode 422, and the other waveguide arm 30 is configured to be modulated by a modulating electric field region 42 formed by the second signal electrode 423 and the ground electrode 422. This type of phase modulation module 100 may be used in the Mach-Zehnder modulator and directly coupled to the light splitting element and the light combining element, and a GSG arrangement design is used for the electrode layer 104.

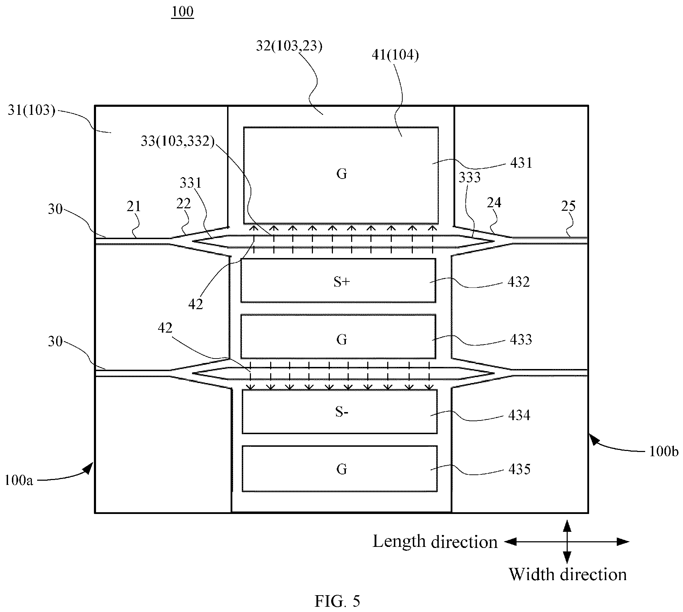

As shown in FIG. 5, in some aspects of the present disclosure, the plurality of electrodes 41 comprise a first ground electrode 431, a first signal electrode 432, a second ground electrode 433, a second signal electrode 434 and a third ground electrode 435 which are arranged in sequence, and the second ridge layer 33 and the first ridge layer 32 form two waveguide arms 30. One of the waveguide arms 30 is configured to be modulated by a modulating electric field region 42 formed by the first ground electrode 431 and the first signal electrode 432, and the other waveguide arm 30 is configured to be modulated by a modulating electric field region 42 formed by the second ground electrode 433 and the second signal electrode 434. This type of phase modulation module 100 may be used in the Mach-Zehnder modulator and directly coupled to the light splitting element and the light combining element, and a GSGSG arrangement design is used for the electrode layer 104. The first signal electrode 432 and the second signal electrode 434 may be configured to receive a differential signal.

In some aspects of the present disclosure, the waveguide arms may adopt a folded design, and each waveguide arm comprises at least one bent portion. For example, if the waveguide arm is folded once, it comprises one bent portion; if the waveguide arm is folded twice, it comprises two bent portions, and so on. The folded design of the waveguide arm can greatly reduce the dimension of the phase modulation module in the length direction. In addition, in order to obtain a better device performance, the length of the waveguide arm can be increased according to a desired design, with little influence on the overall length of the device.

Since the waveguide arm may adopt a folded design, two ends of the waveguide arm may be located on the same side face or two opposite side faces of the phase modulation module depending on its folding times. For example, in some aspects, as shown in FIG. 2, the waveguide arm 30 is not folded or is folded for even times, so that the input end face 100a and the output end face 100b may be respectively located on two opposite side faces of the phase modulation module 100, that is, respectively located on two opposite sides of the phase modulation module 100. In some other aspects, the waveguide arm is folded for odd times, so that the input end face and the output end face may be located on the same side face of the phase modulation module, that is, on the same side of the phase modulation module.

An aspect of the present disclosure further provides an electro-optic modulator, comprising a phase modulation module 100 according to any one of the aspects described above. Based on the above design of the phase modulation module 100, the transmission loss of the electro-optic modulator can be reduced, and the working performance of the electro-optic modulator can be improved.

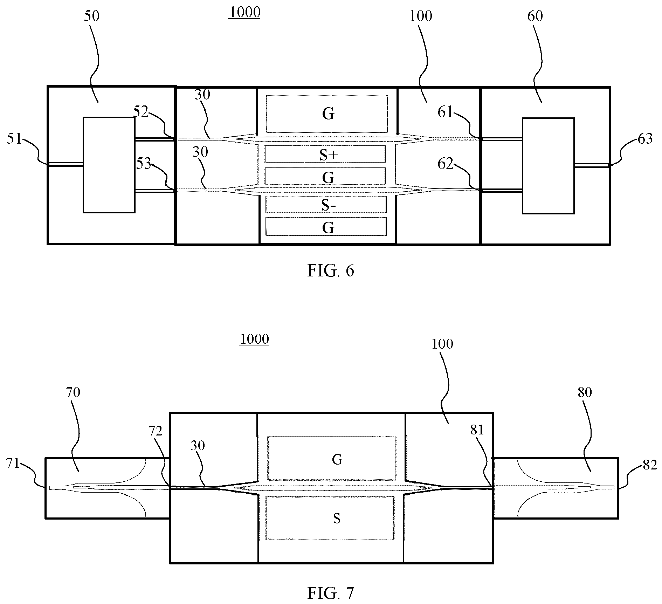

As shown in FIG. 6, in some aspects, the electro-optic modulator 1000 is a Mach-Zehnder modulator, and the second ridge layer 33 and the first ridge layer 32 of the waveguide layer 103 form two waveguide arms 30. The electro-optic modulator 1000 further comprises a light splitting element 50 and a light combining element 60. The light splitting element 50 has a ridge waveguide structure and comprises a signal input end 51, a first split light output end 52, and a second split light output end 53; and the light combining element 60 has a ridge waveguide structure and comprises a first split light input end 61, a second split light input end 62, and a signal output end 63. The two waveguide arms 30 are respectively coupled at one end to the first split light output end 52 and the second split light output end 53, and respectively coupled at the other end to the first split light input end 61 and the second split light input end 62.

The light splitting element 50 is not specifically limited in type, as long as it comprises at least a signal input end 51, a first split light output end 52, and a second split light output end 53. For example, the light splitting element may be a light splitting element with one input and two outputs. The light combining element 60 is not specifically limited in type, as long as it comprises at least a first split light input end 61, a second split light input end 62, and a signal output end 63. For example, the light combining element may be a light combining element with two inputs and one output, a light combining element with two inputs and three outputs, or the like.

As shown in FIG. 7, in some aspects, the electro-optic modulator 1000 is used in a laser. The electro-optic modulator 1000 further comprises a first spot size conversion element 70 and a second spot size conversion element 80. The first spot size conversion element 70 has a ridge waveguide structure and comprises a divergent input end 71 and a convergent output end 72, and the second spot size conversion element 80 has a ridge waveguide structure and comprises a convergent input end 81 and a divergent output end 82. A waveguide arm 30 has one end coupled to the convergent output end 72 of the first spot size conversion element 70, and the other end coupled to the convergent input end 81 of the second spot size conversion element 80.

Since the waveguide arm 30 of the phase modulation module 100 can be directly coupled to a ridge waveguide structure of the light splitting element, the light combining element, the spot size conversion element, etc., without the need to arrange an optical conversion element therebetween, it is beneficial to reduce the transmission loss of the electro-optic modulator, and improve the working performance of the electro-optic modulator.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case that the first feature is directly or obliquely above the second feature, or merely indicates that the first feature is at a higher level than the second feature. The first feature being "below", "under" or "beneath" the second feature includes the case that the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Therefore, the scope of protection of the present disclosure shall be subject to the scope of protection of the claims.

## Claims

1. A phase modulation module, comprising an input end face (100a) and an output end face (100b), comprising a substrate (101), an isolation layer (102), a waveguide layer (103), and an electrode layer (104) which are arranged in sequence, wherein
the electrode layer (104) comprises a plurality of electrodes which are arranged at intervals and configured to form a modulating electric field region (42); and
the waveguide layer (103) comprises a plate layer (31), a first ridge layer (32) and a second ridge layer (33) which are arranged in sequence in a direction away from the substrate (101), wherein
the plate layer (31) extends to the input end face (100a) and the output end face (100b);
the first ridge layer (32) protrudes in a ridge shape from a surface of the plate layer (31) and extends to the input end face (100a) and the output end face (100b), and the first ridge layer (32) is partially located in the modulating electric field region (42);
the second ridge layer (33) protrudes in a ridge shape from a surface of the first ridge layer (32) and has a spacing from each of the input end face (100a) and the output end face (100b), and the second ridge layer (33) is partially located in the modulating electric field region (42); and
the second ridge layer (33) and the first ridge layer (32) form at least one waveguide arm extending to the input end face (100a) and the output end face (100b) and modulated by the modulating electric field region (42).

2. The phase modulation module according to claim 1, wherein
the second ridge layer (33) comprises a first variable-width portion, a first constant-width portion and a second variable-width portion which are connected in sequence in a length direction,
the first constant-width portion has a constant width everywhere, and a portion of the first constant-width portion is located in the modulating electric field region (42), wherein a width direction is orthogonal to the length direction; and
the width of the first variable-width portion and the width of the second variable-width portion each decrease in gradient or gradually in a direction away from the first constant-width portion.

3. The phase modulation module according to any of claims 1 to 2, wherein
the first ridge layer (32) comprises a second constant-width portion, a third variable-width portion, a plate portion, a fourth variable-width portion and a third constant-width portion which are connected in sequence in a length direction,
the second constant-width portion has a constant width everywhere, and the third constant-width portion has a constant width everywhere;
a portion of the plate portion is located in the modulating electric field region (42); and
the width of the third variable-width portion and the width of the fourth variable-width portion each decrease in gradient or gradually in a direction away from the plate portion.

4. The phase modulation module according to any of claims 1 to 3, wherein
the plurality of electrodes comprise a ground electrode and a signal electrode, and the second ridge layer (33) and the first ridge layer (32) form a single waveguide arm modulated by a modulating electric field region (42) formed by the ground electrode and the signal electrode.

5. The phase modulation module according to any of claims 1 to 4, wherein
the plurality of electrodes comprise a first signal electrode, a ground electrode and a second signal electrode which are arranged in sequence; and
the second ridge layer (33) and the first ridge layer (32) form two waveguide arms, wherein one of the waveguide arms is modulated by a modulating electric field region (42) formed by the first signal electrode and the ground electrode, and the other waveguide arm is modulated by a modulating electric field region (42) formed by the second signal electrode and the ground electrode.

6. The phase modulation module according to any of claims 1 to 5, wherein
the plurality of electrodes comprise a first ground electrode, a first signal electrode, a second ground electrode, a second signal electrode and a third ground electrode which are arranged in sequence; and
the second ridge layer (33) and the first ridge layer (32) form two waveguide arms, wherein one of the waveguide arms is modulated by a modulating electric field region (42) formed by the first ground electrode and the first signal electrode, and the other waveguide arm is modulated by a modulating electric field region (42) formed by the second ground electrode and the second signal electrode.

7. The phase modulation module according to any of claims 1 to 6, wherein
at least a portion of the electrode layer (104) is formed on a surface of the first ridge layer (32) away from the substrate (101) and does not overlap the second ridge layer (33), or
at least a portion of the electrode layer (104) is formed on a surface of the plate layer (31) away from the substrate (101) and does not overlap the first ridge layer (32) and the second ridge layer (33), or
at least a portion of the electrode layer (104) is formed on a surface of the isolation layer (102) away from the substrate (101) and does not overlap the waveguide layer (103), or
the phase modulation module further comprises an insulating support layer located between the waveguide layer (103) and the electrode layer (104), and at least a portion of the electrode layer (104) is formed on a surface of the insulating support layer away from the substrate (101) and does not overlap the second ridge layer (33).

8. The phase modulation module according to any one of claims 1 to 7, wherein
each waveguide arm comprises at least one bent portion.

9. The phase modulation module according to any one of claims 1 to 8, wherein
the input end face (100a) and the output end face (100b) are respectively located on two opposite sides of the phase modulation module, or
the input end face (100a) and the output end face (100b) are located on the same side of the phase modulation module.

10. An electro-optic modulator, comprising: a phase modulation module according to any one of claims 1 to 9.

11. The electro-optic modulator according to claim 10, further comprising:
a first spot size conversion element and a second spot size conversion element, wherein the first spot size conversion element has a ridge waveguide structure and comprises a divergent input end and a convergent output end, and the second spot size conversion element has a ridge waveguide structure and comprises a convergent input end and a divergent output end; and
one of the at least one waveguide arm has one end coupled to the convergent output end of the first spot size conversion element, and the other end coupled to the convergent input end of the second spot size conversion element.

12. The electro-optic modulator according to any of claims 10 to 11, wherein
the second ridge layer (33) and the first ridge layer (32) form at least two waveguide arms;
the electro-optic modulator further comprises a light splitting element and a light combining element, wherein the light splitting element has a ridge waveguide structure and comprises a signal input end, a first split light output end, and a second split light output end, and the light combining element has a ridge waveguide structure and comprises a first split light input end, a second split light input end, and a signal output end; and
two of the at least two waveguide arms are respectively coupled at one end to the first split light output end and the second split light output end, and respectively coupled at the other end to the first split light input end and the second split light input end.
